# EUROPEAN PATENT SPECIFICATION

(11) **EP 0 474 518 B1**
(45) Date of publication and mention of the grant of the patent: **15.01.1997**
(21) Application number: 91310023.6
(22) Date of filing: 30.10.1991
(51) Int. Cl.: B44C 5/04, B44C 1/10, E04F 13/08, E06B 3/72

(54) **Panel decoration**
Verfahren zur Verzierung einer Platte
Procédé pour la décoration d'un panneau

(30) Priority: 30.10.1990 GB 9023602
(43) Date of publication of application: 11.03.1992
(60) Divisional application: 94120537.9
(73) Proprietor: AUMAC LIMITED, London W1 (GB)
(72) Inventor: Audritt, Vincent Mark, Templefields, Harlow, Essex CM20 2BQ (GB); Audritt, Michael Leonard, Templefields, Harlow, Essex CM20 2BQ (GB)
(74) Representative: Lawrence, Malcolm Graham

(56) References cited:
- WO-A-87/02407
- GB-A- 1 420 274
- US-A- 4 097 100
- US-A- 4 587 141

## Description

The present invention relates to the decoration of panels and, in particular, to a method of applying a decorative finish to a raised and fielded door or like panel.

In order to conserve forests it is becoming increasingly undesirable to produce solid wood products. For example, solid wood mahogany products are becoming unfashionable with all true conservationists because of the effect on tropical rain forests caused by deforestation to supply mahogany wood. Moreover, equally good products can be produced from wood waste formed into, for example, medium density fibreboard by laminating to the outside surface thereof a decorative finish applied as a sheet of material such as paper, plastics or a paper/plastics laminate.

Thus, it is known to apply a decorative finish to door or like panels using various kinds of sheet material and a heat activatable coating on the panel. The panel and sheet material typically are pressed together at a temperature at which the coating is activated and the thus-formed laminate then cooled to provide a decorated panel.

While the above technique is generally satisfactory difficulties can arise (a) with the use of paper sheet material and/or (b) where the panel is a raised and fielded panel with fielding varying in at least two directions at each corner of the panel. In such circumstances wrinkling can occur, especially at each corner and the decorative finish can be spoiled.

Within the above context we have now found surprisingly that wrinkling of the sheet material especially at each corner can be avoided by a careful selection of the operating conditions, generally time, temperature and pressure.

Accordingly, the present invention provides a method of applying a decorative finish to a raised and fielded panel, which method comprises bringing together the panel and, as a decorative finish, a sheet of wrinklable furniture foil, said furniture foil comprising a sheet of decorative paper material comprising paper sheet and resin-impregnation, the panel and furniture foil being brought together so that the foil overlies the raised and fielded side of the panel, there being for adhesion of said furniture foil to said panel a coating of a heat-activatable adhesive composition between the panel and said furniture foil, and pressing said furniture foil against the panel at an elevated temperature and pressure to activate said adhesive composition and so as to form by said foil an unwrinkled decorative surface on the raised and fielded side of the panel in which the adhered furniture foil follows the contours of the panel, the decorative paper material comprising the paper sheet and the resin to a total combined weight thereof of not more than 140gsm, and said paper-thin wrinklable furniture foil optionally including as part thereof an unstructured anti-telegraphing layer in the form of a fleece backing to said decorative paper material sheet, characterized in that the method is performed whilst complying with the following parameters:-
(i) the elevated temperature at which said pressing of said furniture foil against the panel is effected is at least about 90°C and not more than about 170°C,
(ii) the fielding of the panel reduces the thickness of the panel through shallow curvature of the fielding and defines a relatively raised panel portion enclosed by the fielding in such manner that the fielding frames said relatively raised panel portion in fielding lengths unified at arissed corner junctions of the fielding, the fielding curvature being curvature to a radius of about 45 mm or more,
(iii) the adhesive composition is applied by spraying and to the raised and fielded side of the panel,
(iv) the elevated pressure at which said pressing of said furniture foil against the panel is effected is from about 1 to about 6 bars,
(v) the duration of said pressing of said furniture foil against the panel is a period of from about 5 to about 25 seconds, and
(vi) the adhesive composition is one which is heat-activatable at temperatures in the range from about 80°C to the pressing temperature.

The method of the invention is particularly useful when applied to doors or the like in which a panel is framed by a framing element at each side edge and the abutting ends of the elements are mitred. Typically, in such an arrangement the panel may comprise a medium density fibreboard and the framing elements may comprise a laminated profile. Especially the framing elements may comprise a chipboard or medium density fibreboard laminated profile, which is already coated or laminated before the method of the invention is carried out. Thus, typically the profiles may be chip board profiles wrapped in decorative sheet material, the sheet material being chosen to match or contrast with that provided by the sheet material to be adhered to the panel.

In the method of the invention the heat activatable composition may be any composition activatable at or above about 80°C and compatible with the panel. Preferably, the composition comprises a polyvinylacetate cross-linking adhesive. Alternatively, however, or additionally, the composition may comprise polyurethane.

Prior to carrying out the method of the invention the said composition is applied to the panel face of the obverse face of the decorative sheet by any suitable means such as by brushing or roller coating. Preferably, however, the composition is applied to the panel face by spraying.

The decorative material is a paper sheet, which may be a laminate of paper and a a fleece backing substrate.

In the method of the invention the steps used to decorate the panel are particularly applicable when the panel fielding varies in at least two or three directions at each corner of the panel. Furthermore, the method is preferably one wherein the panel and the sheet of decorative material are brought together in a membrane (or bag) press.

In carrying out the method of the invention the coated panel face and the decorative material are brought together under selected conditions within the above given ranges in a press. Then, if the pressing is not satisfactory and wrinkles result (this may be due to varying ambient temperature) the pressing is repeated at a higher temperature nearer the upper limit of about 170°C -preferably at or above about 135°C. Next, if the pressing remains unsatisfactory the pressing time and/or the pressing pressure is/are increased until a satisfactory result is obtained. It is, of course, to be understood that the temperature mentioned herein is the indicated temperature of the press or pressing conditions used, that is to say by indicated temperature we mean the temperature indicated by the sensor display on the press used. Also, it is to be understood that for reasons of cost the temperature of pressing should be kept as low as possible.

The method of the invention will now be described in detail by way of example only with reference to the following specific Examples.

### Example 1

A medium density fibreboard raised and fielded door panel having the following dimensions:
- Width:: 40 cm
- Length:: 60 cm
- Fielding:: Panel thickness reduced from 9 mm to 5 mm through a shallow curve of radius 45 mm
was coated on its outer fielded face with a polyurethane Helmutin-type adhesive available under the trade mark Helmipur 34333, at a coating weight of 70 to 80 gsm. The coated panel face was then covered by an 80 gsm resin-impregnated paper decorated with a wood grain finish on the paper surface not adjacent the coated face and the whole pressed in a membrane (or bag) press without vacuum at about 140°C for about 12 seconds at a pressure of about 2.5 bar.

The resulting panel was of a good finish and there were no wrinkles at the fielded corners.

### Example 2

The method of Example 1 was repeated except that the door panel was 30 cm wide and 61 cm long. Also, the polyvinylacetate adhesive was a standard laminating grade of PVA glue and the decorative sheet material was a 140 gsm resin-impregnated paper provided with a fleece backing. The whole was pressed in a membrane (or bag) press without vacuum at about 130°C for about 20 seconds at a pressure of about 2.5 bar. Again, the resulting panel was of good finish without wrinkling.

It is, of course, to be understood that the invention is not limited to the specific details given above and that numerous variations may be made without departing from the scope of the claims which follow.

## Claims

1. A method of applying a decorative finish to a raised and fielded panel, which method comprises bringing together the panel and, as a decorative finish, a sheet of wrinklable furniture foil, said furniture foil comprising a sheet of decorative paper material comprising paper sheet and resin-impregnation, the panel and furniture foil being brought together so that the foil overlies the raised and fielded side of the panel, there being for adhesion of said furniture foil to said panel a coating of a heat-activatable adhesive composition between the panel and said furniture foil, and pressing said furniture foil against the panel at an elevated temperature and pressure to activate said adhesive composition and so as to form by said foil an unwrinkled decorative surface on the raised and fielded side of the panel in which the adhered furniture foil follows the contours of the panel, the decorative paper material comprising the paper sheet and the resin to a total combined weight thereof of not more than 140gsm, and said paper-thin wrinklable furniture foil optionally including as part thereof an unstructured anti-telegraphing layer in the form of a fleece backing to said decorative paper material sheet, characterized in that the method is performed whilst complying with the following parameters:-
(i) the elevated temperature at which said pressing of said furniture foil against the panel is effected is at least about 90°C and not more than about 170°C,
(ii) the fielding of the panel reduces the thickness of the panel through shallow curvature of the fielding and defines a relatively raised panel portion enclosed by the fielding in such manner that the fielding frames said relatively raised panel portion in fielding lengths unified at arissed corner junctions of the fielding, the fielding curvature being curvature to a radius of about 45 mm or more,
(iii) the adhesive composition is applied by spraying and to the raised and fielded side of the panel,
(iv) the elevated pressure at which said pressing of said furniture foil against the panel is effected is from about 1 to about 6 bars,
(v) the duration of said pressing of said furniture foil against the panel is a period of from about 5 to about 25 seconds, and
(vi) the adhesive composition is one which is heat-activatable at temperatures in the range from about 80°C to the pressing temperature.

2. A method according to claim 1, wherein the panel is framed by a framing element at each side edge and the abutting ends of the elements are mitred.

3. A method according to claim 1 or claim 2, wherein the panel comprises a medium density fibreboard.

4. A method according to claim 2 or claim 3, wherein the framing elements comprise a laminated profile.

5. A method according to Claim 4 wherein the laminated profile is a chipboard or medium density fibreboard laminated profile.

6. A method according to any one of the preceding claims, wherein the composition comprises a polyvinylacetate cross-linking adhesive.

7. A method according to any one of the preceding claims, wherein the composition comprises a polyurethane.

8. A method according to any one of the preceding claims, wherein the panel fielding varies in at least two directions at each corner of the panel.

9. A method according to any one of the preceding claims, wherein the panel and sheet of decorative material are brought together in a membrane press.

## Patentansprüche

1. Verfahren zum Aufbringen einer dekorativen Oberfläche auf eine erhabene und flächengestaltete Paneele, wobei das Verfahren ein Zusammenbringen der Paneele und einer Lage aus faltbarer Möbelfolie als eine dekorative Oberfläche, wobei die Möbelfolie eine Lage aus ein Papierblatt und eine Harz-Imprägnierung umfassendem, dekorativen Papiermaterial umfaßt, wobei die Paneele und die Möbelfolie zusammengebracht werden, derart, daß die Folie die erhabene und flächengestaltete Seite der Paneele überlagert, wobei ein Überzug einer wärmeaktivierbaren Klebstoffzusammensetzung zwischen der Paneele und der Möbelfolie zur Adhäsion der Möbelfolie an der Paneele vorhanden ist, und ein Andrücken der Möbelfolie an die Paneele bei einer erhöhten Temperatur und einem erhöhten Druck, um die Klebstoffzusammensetzung zu aktivieren und um so eine ungefaltete dekorative Oberfläche an der erhabenen und flächengestalteten Seite der Paneele, in welcher die angeklebte Möbelfolie den Konturen der Paneele folgt, durch die Folie zu bilden, wobei das dekorative Papiermaterial das Papierblatt und das Harz auf ein kombiniertes Gesamtgewicht davon von nicht mehr als 140 g/m² umfaßt und die papierdünne, faltbare Möbelfolie fakultativ als Teil davon eine unstrukturierte, eine Oberflächenunruhe beseitigende Schicht in der Form eines Vließes, die dem Papierblatt aus dekorativem Material hinterlegt ist, beeinhaltet, umfaßt, dadurch gekennzeichnet, daß das Verfahren durchgeführt wird, während die folgenden Parameter erfüllt werden:
(i) die erhöhte Temperatur, bei welcher das Andrücken der Möbelfolie an die Paneele vorgenommen wird, wenigstens ca. 90°C und nicht mehr als etwa 170°C beträgt,
(ii) die Flächengestaltung der Paneele die Dicke der Paneele durch eine flache Krümmung der Flächengestaltung vermindert und einen verhältnismäßig vorstehenden Paneelenabschnitt, welcher durch die Flächengestaltung eingeschlossen ist, definiert, derart, daß die Flächengestaltung den verhältnismäßig vorstehenden Paneelenabschnitt in Flächengestaltungslängen, die sich an entstandenen Eckverbindungen der Flächengestaltung vereinigen, einrahmen, wobei die Flächengestaltungskrümmung eine Krümmung mit einem Radius von ungefähr 45 mm oder mehr ist,
(iii) die Klebstoffzusammensetzung durch Aufsprühen auf die erhabene und flächengestaltete Seite der Paneele aufgetragen wird,
(iv) der erhöhte Druck, bei welchem das Andrücken der Möbelfolie an die Paneele vorgenommen wird, von etwa 1 bis etwa 6 bar beträgt,
(v) die Dauer des Andrückens der Möbelfolie an die Paneele eine Periode von etwa 5 bis ungefähr 25 Sekunden ist, und
(vi) die Klebstoffzusammensetzung eine solche ist, welche bei Temperaturen in dem Bereich von etwa 80°C zu der Andrucktemperatur wärmeaktivierbar ist.

2. Verfahren nach Anspruch 1, bei welchem die Paneele von einem Rahmenelement an jeder Seitenkante eingerahmt wird und die anstoßenden Enden der Elemente auf Gehrung gebracht werden.

3. Verfahren nach Anspruch 1 oder 2, bei welchem die Paneele eine Mitteldichte-Faserplatte umfaßt.

4. Verfahren nach Anspruch 2 oder 3, bei welchem die Rahmenelemente ein laminiertes Profil umfassen.

5. Verfahren nach Anspruch 4, bei welchem das laminierte Profil eine Spanplatte oder ein Mitteldichte-Faserplatte laminiertes Profil ist.

6. Verfahren nach jedem der vorhergehenden Ansprüche, bei welchem die Zusammensetzung einen Polyvinylacetat-Vernetzungsklebstoff umfaßt.

7. Verfahren nach jedem der vorhergehenden Ansprüche, bei welchem die Zusammensetzung Polyurethan umfaßt.

8. Verfahren nach jedem der vorhergehenden Ansprüche, bei welchem die Paneelenflächengestaltung in wenigstens zwei Richtungen zu jeder Ecke der Paneele variiert.

9. Verfahren nach jedem der vorhergehenden Ansprüche, bei welchem die Paneele und eine Lage aus dekorativem Material in einer Membranpresse zusammengebracht werden.

## Revendications

1. Procédé d'application d'une finition décorative à un panneau debout et pourvu de champs, lequel procédé comprend la réunion du panneau et, comme finition décorative, une feuille de film de garniture froissable, ledit film de garniture comprenant une feuille de matériau de papier décoratif comprenant une feuille de papier et une imprégnation de résine, les panneau et film de garniture étant réunis de sorte que le film recouvre le côté debout et pourvu de champs du panneau, ceci pour l'adhérence dudit film de garniture audit panneau, un revêtement d'une composition adhésive activable par la chaleur entre le panneau et ledit film de garniture, et le pressage dudit film de garniture contre le panneau à une température élevée et la mise sous pression pour activer ladite composition adhésive et de manière à former par ledit film une surface décorative non froissée sur le côté debout et pourvu de champs du panneau dans lequel le film de garniture adhéré suit les contours du panneau, le matériau de papier décoratif comprenant feuille de papier et la résine pour un poids combiné total de ceux-ci de pas plus de 140gsm, et ledit film de garniture froissable en papier fin comportant éventuellement en tant que partie de celui-ci une couche antipelure non structurée sous la forme d'une nappe renforçant ladite feuille de matière de papier décoratif, caractérisé en ce que le procédé est réalisé en couplage avec les paramètres suivants :
(i) la température élevée à laquelle ledit pressage dudit film de garniture contre le panneau est effectué est au moins environ 90°C et n'est pas supérieure à environ 170°C,
(ii) le champ du panneau réduit l'épaisseur du panneau par une courbure peu profonde du champ et définit une partie de panneau debout de manière relative renfermée par le champ de telle manière que le champ encadre ladite partie de panneau debout de manière relative dans des longueurs de champ unifiées aux jonctions de coin élevées du champ, la courbure du champ étant une courbure d'un rayon d'environ 45 mm ou plus,
(iii) la composition adhésive est appliquée par pulvérisation et vers le côté debout et pourvu de champ du panneau,
(iv) la pression élevée à laquelle ledit pressage dudit film de garniture contre le panneau est effectué est d'environ 1 à environ 6 bars,
(v) la durée dudit pressage dudit film de fourniture contre le panneau est une période d'environ 5 à environ 25 secondes, et
(vi) la composition adhésive en est une qui est activable par la chaleur à des températures dans la gamme d'environ 80°C à la température de pressage.

2. Procédé selon la revendication 1, dans lequel le panneau est encadré par un élément d'encadrement à chaque bord de côté et les extrémités jointives des éléments sont en onglets.

3. Procédé selon la revendication 1 ou la revendication 2, dans lequel le panneau comprend un panneau de fibre de densité moyenne.

4. Procédé selon la revendication 2 ou la revendication 3, dans lequel les éléments d'encadrement comprennent un profil laminé.

5. Procédé selon la revendication 4, dans lequel le profil laminé est un panneau de particules ou un profil laminé de panneau de particules de densité moyenne.

6. Procédé selon l'une quelconque des revendications précédentes, dans lequel la composition comprend un adhésif réticulant de polyvinyle acétate.

7. Procédé selon l'une quelconque des revendications précédentes, dans lequel la composition comprend un polyuréthane.

8. Procédé selon l'une quelconque des revendications précédentes, dans lequel lesdits champs du panneau varient dans au moins deux directions à chaque coin du panneau.

9. Procédé selon l'une quelconque des revendications précédentes, dans lequel le panneau et la feuille de matériau décoratif sont réunis dans une presse à membrane.
